(19) Europäisches Patentamt
European Patent Office
Office européen des brevets

(11) **EP 3 665 384 B1**

(12) **EUROPÄISCHE PATENTSCHRIFT**

(45) Veröffentlichungstag und Bekanntmachung des Hinweises auf die Patenterteilung:
**09.06.2021  Patentblatt 2021/23**

(21) Anmeldenummer: **18752732.0**

(22) Anmeldetag: **07.08.2018**

(51) Int Cl.:
***F03D 1/06*** *(2006.01)*

(86) Internationale Anmeldenummer:
**PCT/EP2018/071340**

(87) Internationale Veröffentlichungsnummer:
**WO 2019/030205 (14.02.2019 Gazette 2019/07)**

(54) **ROTORBLATT EINES ROTORS EINER WINDENERGIEANLAGE, WINDENERGIEANLAGE UND VERFAHREN ZUR VERBESSERUNG DES WIRKUNGSGRADES EINES ROTORS EINER WINDENERGIEANLAGE**

ROTOR BLADE OF A WIND TURBINE ROTOR, WIND TURBINE AND METHOD FOR IMPROVING THE EFFICIENCY OF A WIND TURBINE ROTOR

PALE DE ROTOR D'UN ROTOR D'UN AÉROGÉNÉRATEUR, AÉROGÉNÉRATEUR ET PROCÉDÉ D'AMÉLIORATION DU TAUX DE RENDEMENT D'UN ROTOR D'UN AÉROGÉNÉRATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2017   DE 102017117843**

(43) Veröffentlichungstag der Anmeldung:
**17.06.2020   Patentblatt 2020/25**

(73) Patentinhaber: **Wobben Properties GmbH**
**26607 Aurich (DE)**

(72) Erfinder: **RUBNER, Florian**
**26607 Aurich (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
**EP-A1- 3 176 425        DE-A1-102013 204 637**
**US-A1- 2008 107 540     US-A1- 2012 141 269**
**US-A1- 2017 204 832**

**Beschreibung**

Die Erfindung betrifft ein Rotorblatt eines Rotors einer Windenergieanlage sowie eine Windenergieanlage. Zudem betrifft die vorliegende Erfindung ein Verfahren zur Verbesserung des Wirkungsgrades eines Rotors einer Windenergieanlage.

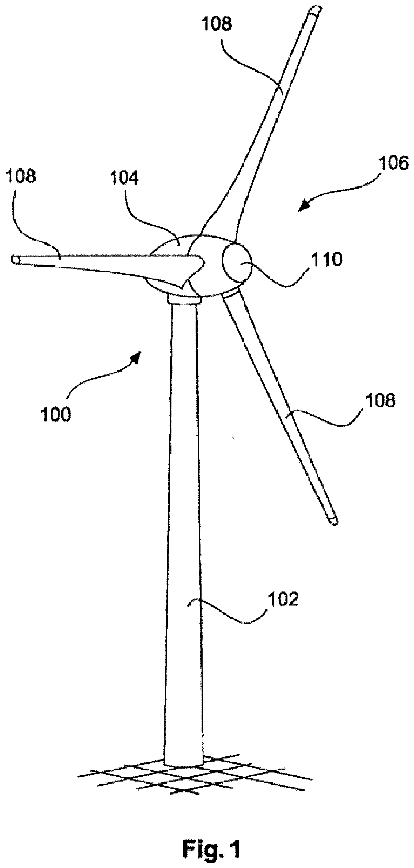

Windenergieanlagen sind allgemein bekannt und beispielsweise wie in Fig. 1 ausgestaltet. Die Auslegung von Windenergieanlagen respektive ihrer Bauteile erfolgt anhand standardisierter Richtlinien (z.B. IEC 61400), welche die wesentlichen Auslegungsanforderungen zur Sicherstellung der technischen Integrität von Windenergieanlagen zum Gegenstand hat. Der Zweck dieser Norm besteht darin, für ein angemessenes Schutzniveau gegen Schäden aus Risiken während der geplanten Lebensdauer der Windenergieanlage zu sorgen. Hierbei fließen Normparameter in die von einer normierten Last abhängige, jedoch nicht standortspezifische, Dimensionierung der Windenergieanlage ein. Bei den Normparametern handelt es sich unter anderem um Scherung, das Auftreten von Turbulenzen, klimatische Bedingungen, Luftdichte, Referenzgeschwindigkeiten für Windklassen und Windzonen. Aufgrund ihrer von der normierten Last abhängigen Dimensionierung weisen die Rotorblätter ein definiertes Profil mit fixen Parametern, wie z.B. der Profiltiefe mit dazugehörigen Profilpolaren, auf. Dieses festgelegte Profil bildet die Grundlage für die Lastrechnung und die Berechnung der Jahresenergieerzeugung (AEP).

US 2017/0204832 A1 offenbart eine Hinterkante für ein Rotorblatt eines aerodynamischen Rotors einer Windenergieanlage. Die Hinterkante umfasst dabei eine Hinterkantenverlaufslinie, die die Kontur der Hinterkante abbildet, und mehrere Zacken zur Verbesserung des Strömungsverhaltens an der Hinterkante. Dabei sind die Zacken in Abhängigkeit von der Hinterkantenverlaufslinie von Geometrie- und Betriebsparametern und somit an der Hinterkante vorgesehen.

EP 3 176 425 A1 offenbart eine Anordnung, die aus einem Tragflächenkörper gebildet wird, beispielsweise einem Flügel eines Flugzeugs oder einem Rotorblatt einer Windkraftanlage, der eine Hinterkante und eine geräuschreduzierende Verzahnung aufweist, die sich entlang mindestens eines Teils der Hinterkante erstreckt. Die Verzahnung umfasst eine Grundplatte, die eine erste Kante definiert, die mit dem Tragflächenkörper in der Nähe der Hinterkante verbunden ist, und eine zweite Kante, an der eine Anzahl von Zähnen angebracht sind, die von der Grundplatte abgewandte Spitzen definieren. Die Grundplatte befindet sich hinter der Hinterkante und ist durch einen Spalt von dieser getrennt, wobei die Verbindung zwischen der Grundplatte und dem Tragflächenkörper durch mindestens ein bandartiges Element aus einem Material definiert ist, das es dem bandartigen Element ermöglicht sich zu biegen, dehnen und schnallen. Die Verzahnung ist so steif gegen Biegung, aber schwach gegen Torsion, dass sich die Verzahnung in einem Bereich erwarteter Betriebslasten nicht wesentlich biegen kann, während sich die Grundplatte in diesem Bereich erwarteter Betriebslasten verdrehen kann.

DE 10 2013 204 637 A1 betrifft ein Verfahren zum Anbringen eines Hinterkantenkamms an ein Rotorblatt einer Windenergieanlage, wobei das Rotorblatt eine Druck- und eine Saugseite aufweist und eine im Wesentlichen gerade Endkante. Es wird an der Endkante ein nach hinten vorstehender Federabschnitt vorgesehen, so dass im Bereich des Federabschnitts je eine Stufe zur Druckseite und zur Saugseite ausgebildet ist. Und es wird der Hinterkantenkamm, oder ein Teil davon, auf den Federabschnitt aufgesetzt, so dass der Hinterkantenkamm jeweils bündig im Bereich der Stufe mit der Saugseite bzw. der Druckseite abschließt.

US 2012/0141269 A1 offenbart eine Rotoranordnung für eine Windkraftanlage und ein Verfahren zur Erhöhung der Belastbarkeit eines Rotorblatts innerhalb einer Belastungsobergrenze für eine Windkraftanlage. Die Rotorblattanordnung weist ein Rotorblatt mit Oberflächen auf, die eine Druckseite, eine Saugseite, eine Anströmkante und eine Abströmkante definieren und die sich zwischen einer Spitze und einer Wurzel erstrecken. Die Rotorblattanordnung weist ferner ein Vergrößerungselement auf, das mit einer Oberfläche des Rotorblatts verbunden ist, wobei das Vergrößerungselement mindestens ein Konstruktionsmerkmal aufweist, das dazu gedacht ist, eine Belastbarkeit des Rotorblatts innerhalb einer Belastungsobergrenze für die Windkraftanlage zu erhöhen. Das Konstruktionsmerkmal ist eine Verlängerung, eine Verbreiterung, eine vergrößernde Krümmung, eine Stelle, an der die Spannbreite vergrößert ist, eine Stelle, an der das Profil vergrößert ist, oder ein vergrößernder Winkel in Bezug auf eine Profiltangente des Rotorblatts.

Für die Emissionen und die Effizienz der Windenergieanlage ist das Design des beziehungsweise der Rotorblätter ein wichtiger Aspekt. Die Rotorblätter einer Windenergieanlage weisen üblicherweise eine Saugund eine Druckseite auf. Die Saug- und die Druckseite laufen an der Rotorblatthinterkante des Rotorblatts zusammen. Durch den Druckunterschied zwischen Saugund Druckseite können Wirbel erzeugt werden, die an der Hinterkante des Rotorblattes für eine Geräuschemission und Leistungsminderung sorgen können.

Die Auslegung einer Windenergieanlage beziehungsweise die daraus resultierende Ausgestaltung der Rotorblätter orientiert sich überwiegend an einem normierten Standort beziehungsweise einer normierten Last, wobei auch standortspezifische Nachweise/Lasten einfließen können. Hierdurch sind die Rotorblätter in ihrer späteren geometrischen Ausgestaltung festgelegt. Insbesondere weisen die Rotorblätter eine fixe Geometrie auf, welche einer nachträglichen Anpassung bezüglich Verwindung oder Profiltiefe im Herstellprozess nicht mehr zugänglich ist.

Der vorliegenden Erfindung liegt somit die Aufgabe zugrunde, wenigstens eines der oben genannten Probleme zu adressieren, insbesondere soll eine Lösung vorgeschlagen werden, die die Wirksamkeit eines Rotorblattes einer Windenergieanlage weiter steigert.

Zur Lösung der Aufgabe wird ein Rotorblatt eines Rotors einer Windenergieanlage gemäß Anspruch 1 vorgeschlagen. Das Rotorblatt weist eine sich zwischen Rotorblattwurzel und Rotorblatt über eine Rotorblattlänge erstreckende Rotorblatthinterkante sowie eine sich zwischen Rotorblatthinterkante und Rotorblattvorderkante einstellende Profiltiefe auf. Zur Effizienzsteigerung weist das Rotorblatt zumindest ein einen durchgängigen Profilabschnitt aufweisendes Profilelement auf, das an oder im Bereich der Rotorblatthinterkante zur Veränderung der Profiltiefe des Rotorblatts anbringbar ist, dessen Erstreckung über die Rotorblatthinterkante hinaus sich in Abhängigkeit von einer normierten lastabhängigen Dimensionierung der Profiltiefe des Rotorblattes und einem sich an einem Aufstellungsort der Windenergieanlage einstellenden Lastniveau bestimmt.

Die Veränderung der Profiltiefe erfolgt durch die Anbringung des zumindest einen Profilelementes, dessen Erstreckung auf Grundlage des Vorliegens einer Differenz zwischen der normierten Last, die der Dimensionierung des Rotorblattes bei dessen Fertigung zu Grunde lag, und einem standortspezifischen, beispielsweise gemessenen und/oder simulierten Lastniveau bestimmt wird. Unterschreitet die gemessene Standortlast, beispielsweise wegen einer geringeren Luftdichte, die der Dimensionierung des Rotorblattes zugrunde liegende normierte Last, liegt eine Überdimensionierung vor. Diese Überdimensionierung stellt eine Lastreserve dar, welche durch die nachträgliche Veränderung der Profiltiefe des Rotorblattes zumindest teilweise nutzbar gemacht wird. Auf Grundlage dieser Überdimensionierung lässt sich die für diesen Standort spezifische zulässige Profiltiefe des Rotorblattes bestimmen, um diese nachträglich anzupassen. Die Anbringung des zumindest einen Profilelements verändert die Profiltiefe des Rotorblattes entsprechend der Erstreckung des Profilelementes. Der durchgängige Profilabschnitt des Profilelementes kann eine konstante oder eine variierende Ausdehnung in Profiltiefenrichtung aufweisen. Durch das zumindest eine Profilelement lässt sich an dem bestehenden Rotorblatt eine größere Windangriffsfläche schaffen, was mit einer Leistungssteigerung durch eine gezielte Ausnutzung der vorhandenen Lastreserve einhergeht.

Zur Vergrößerung der Windangriffsfläche respektive der Erhöhung der Profiltiefe durch das zumindest eine Profilelement sind verschiedene Ausgestaltungen desselben denkbar. Die jeweilige Erstreckung des zumindest einen Profilelements wird in Abhängigkeit von der jeweiligen standortabhängigen Lastreserve der Windenergieanlage bestimmt.

Bevorzugt kann sich das zumindest eine Profilelement zumindest abschnittsweise über die Rotorblattlänge erstrecken. Ein einzelnes, sich durchgehend über die gesamte Rotorblattlänge erstreckendes Profilelement hat den Vorteil, dass weniger Übergänge zwischen diesem und dem Rotorblatt vorhanden sind, an welchen es zu ungewollten Verwirbelungen kommen kann. Andererseits ist das Vorsehen zweier oder mehrerer Profilelemente vorteilhaft, da diese fertigungstechnisch einfacher zu realisieren sind. Zudem ist die Montage an den Rotorblättern einfacher darstellbar. Vorzugsweise ist das zumindest eine Profilelement normal zum Verlauf der Rotorblatthinterkante angeordnet.

In einer bevorzugten Ausführungsform weist das zumindest eine Profilelement in Verlängerung der Rotorblatthinterkante einen sich verjüngenden Verlauf auf. Der verjüngende Verlauf folgt dabei im Wesentlichen dem Querschnittsverlauf des Rotorblattes, das heißt bildet eine beispielsweise spitz zulaufende Fortführung eines Profilschnittes des Rotorblattprofils über die Rotorblatthinterkante hinaus.

In einer bevorzugten Ausführungsform weist das zumindest eine Profilelement in Verlängerung der Rotorblatthinterkante einen konstanten Verlauf auf. Hierzu kann das zumindest eine Profilelement als eine Platte mit konstanter Dicke ausgeführt sein. Auch Kombinationen aus verjüngendem Verlauf und konstantem Verlauf und/oder auch sich aufweitendem Verlauf sind in anderen Ausführungsformen vorteilhaft umsetzbar. Alternativ oder zusätzlich, beispielsweise abschnittsweise, zu einer konstanten Dicke kann das Profilelement in Verlängerung der Rotorblatthinterkante eine abnehmende Dicke, also einen sich verjüngenden Verlauf, aufweisen.

Die Rotorblatthinterkante kann spitz oder stumpf ausgebildet sein, das heißt das Rotorblatt kann ein Flatback Profil aufweisen. Das zumindest eine Profilelement kann direkt an die Hinterkante, insbesondere im Falle einer stumpfen Hinterkante, oder im Bereich der Hinterkante, insbesondere an der Druck- und/oder der Saugseite angeordnet werden. Vorzugsweise kann das sich zumindest abschnittsweise über die Rotorblattlänge erstreckende Profilelement einen zur Längsachse des Rotorblattes abschnittsweise gewundenen Verlauf aufweisen. Das zumindest eine Profilelement folgt der Verwindung des Rotorblattes. Die spezifischen aerodynamischen Eigenschaften des ursprünglichen Rotorblattes bleiben somit trotz der Veränderung der Profiltiefe zumindest im Wesentlichen erhalten.

Bevorzugt kann sich die Erstreckung des zumindest abschnittsweise über die Rotorblattlänge erstreckenden Profilelements in Abhängigkeit von der Profiltiefe des Rotorblatts ändern. Die Breite des Profilelements kann sich mit dem Verlauf der Profiltiefe des Rotorblatts ändern, um die aerodynamische Charakteristik des Rotorblatts zu erhalten. Alternativ oder zusätzlich zu einer Abhängigkeit von der Profiltiefe des Rotorblattes kann die Erstreckung von einer Position in Radiusrichtung des Rotors abhängen.

In einer besonders bevorzugten Ausführungsform ist das Profilelement mehrteilig ausgebildet und weist einen sich in Verlängerung der Rotorblatthinterkante an den Profilabschnitt anschließenden Abschnitt mit einem unterbrochenen Verlauf auf. Besonders bevorzugt ist das Profilelement zweiteilig ausgeführt. Der Profilabschnitt ist, wie hierzu bereits ausgeführt wurde, vorzugsweise als eine Platte ausgeführt. Der sich daran anschließende Abschnitt kann einteilig oder mehrteilig ausgebildet sein. Der unterbrochene Verlauf des Abschnitts ist bevorzugt zackenförmig ausgeführt. Die zackenförmige Ausgestaltung trägt zu einer Verbesserung des Strömungsverhaltens an der Rotorblatthinterkante bei. Durch den zackenförmig unterbrochenen Verlauf des Abschnitts lassen sich an der Rotorblatthinterkante auftretende Wirbel reduzieren. Des Weiteren kann ein solcher Abschnitt zu einer Reduzierung der Geräuschemission beitragen.

In einer besonders bevorzugten Ausführungsform ist das zumindest eine Profilelement einteilig ausgebildet und weist einen gezackten Verlauf, vorzugsweise an der von der Rotorblatthinterkante abgewandten Seite, auf. Zur Erreichung einer Profiltiefenzunahme wird eine Tiefe in Profiltiefenrichtung und/oder eine Breite in Rotorblattlängsrichtung der Zacken in Abhängigkeit von einer bestehenden Lastreserve entsprechend variiert, um die Profiltiefe des Rotorblatts an die für diesen Standort spezifische zulässige Profiltiefe anzupassen. Damit einhergehend wird die Windangriffsfläche des Rotorblatts vergrößert. Der gezackte Verlauf schließt sich an den Profilabschnitt des zumindest einen Profilelementes an bzw. bildet einen Teil des Profilabschnittes, d.h. das Profilelement weist einteilig sich an den Profilabschnitt anschließende Zacken auf.

Auch der zackenförmig unterbrochene Verlauf im Falle der mehrteiligen Ausgestaltung und der gezackte Verlauf im Falle der einteiligen Ausgestaltung erstreckt sich über die Rotorblatthinterkante hinaus, wobei vorzugsweise eine Ausprägung, d.h. insbesondere Länge, Breite und/oder Form der Zacken in Abhängigkeit von einer normierten lastabhängigen Dimensionierung der Profiltiefe des Rotorblattes und einem sich an einem Aufstellungsort der Windenergieanlage einstellenden Lastniveau bestimmt und optimiert wird.

Weiterhin wird eine Windenergieanlage mit wenigstens einem erfindungsgemäßen Rotorblatt, vorzugsweise mit drei erfindungsgemäßen Rotorblättern vorgeschlagen.

Ferner wird ein Verfahren zur Verbesserung des Wirkungsgrades eines Rotors einer Windenergieanlage gemäß Anspruch 10 vorgeschlagen. Der Rotor umfasst wenigstens ein Rotorblatt mit einer sich zwischen Rotorblattwurzel und Rotorblatt über eine Rotortblattlänge erstreckenden Rotorblatthinterkante sowie einer sich zwischen Rotorblatthinterkante und Rotorblattvorderkante einstellenden Profiltiefe. Hierzu wird zur Veränderung der Profiltiefe des Rotorblatts an oder im Bereich der Rotorblatthinterkante zumindest ein mit einem durchgängigen Profilabschnitt versehenes Profilelement angebracht, dessen Erstreckung über die Rotorblatthinterkante hinaus in Abhängigkeit von einer normierten lastabhängigen Dimensionierung der Profiltiefe des Rotorblattes und einem sich an einem Aufstellungsort der Windenergieanlage einstellenden Lastniveau bestimmt wird. Während des laufenden Betriebs der Windenergieanlage werden Informationen über die auftretenden Bedingungen erfasst und ausgewertet, um auf das tatsächliche Lastniveau rückschließen zu können. Eine sich zwischen der aufgrund der normierten lastabhängigen Dimensionierung angenommenen Auslegungslast und der am Aufstellungsstandort tatsächlich bestimmten Auslastung der Windenergieanlage einstellende Lastreserve wird durch die Anbringung des zumindest einen Profilelementes nutzbar.

Es ergeben sich somit die Zusammenhänge, Erläuterungen und Vorteile gemäß wenigstens einer Ausführungsform des beschriebenen Rotorblattes.

Insbesondere kann mit zunehmender Unterschreitung der normierten lastabhängigen Dimensionierung durch das sich einstellende standortspezifische Lastniveau eine größere Erstreckung des zumindest einen Profilelements gewählt werden.

Bevorzugt wird das zumindest eine Profilelement nachgerüstet. Durch das spezifische Nachrüsten der Rotorblätter mit dem zumindest einen Profilelement wird eine größere Windangriffsfläche erzeugt, so dass sich ein höherer Beitrag zur Jahresenergieerzeugung erzielen lässt.

Nachfolgend wird die Erfindung exemplarisch anhand von Ausführungsbeispielen unter Bezugnahme auf die begleitenden Figuren näher erläutert.

Fig. 1 zeigt eine Windenergieanlage schematisch in einer perspektivischen Ansicht.

Fig. 2 zeigt eine schematische Ansicht eines Rotorblatts mit einer Rotorblatt-vorderkante sowie einer Rotorblatthinterkante.

Fig. 3a zeigt eine schematische Darstellung eines Teilabschnitts einer Rotorblatthinterkante mit zumindest einem daran angeordneten Profil-element.

Fig. 3b bis 3e zeigen schematisch verschiedene Beispiele eines Querschnittes des in Fig. 3a gezeigten Profilelementes.

Fig. 4 zeigt eine schematische Darstellung eines Teilabschnitts einer Rotorblatthinterkante mit einem daran angeordneten, einen gezackten Verlauf aufweisenden Abschnitt vor der Veränderung einer Profiltiefe des Rotorblatts.

Fig. 5 zeigt eine schematische Darstellung des Teilabschnitts der Rotorblatthinterkante gemäß Fig. 4 mit einem daran angeordneten Profilelement.

Fig. 6        zeigt eine schematische Darstellung eines Teilabschnitts einer Rotorblatthinterkante mit einem als Profilelement ausgeführten, einen gezackten Verlauf aufweisenden Abschnitt.

Fig. 7        zeigt eine schematische Darstellung des Teilabschnitts der Rotorblatthinterkante gemäß Fig.6.

Es ist zu beachten, dass gleiche Bezugszeichen eventuell ähnliche, nicht identische Elemente auch unterschiedlicher Ausführungsformen bezeichnen können.

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Fig. 1 eine Windenergieanlage als solche schematisch, so dass die vorgesehene zackenförmige Hinterkante an dem Rotorblatt nicht eindeutig erkennbar ist.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

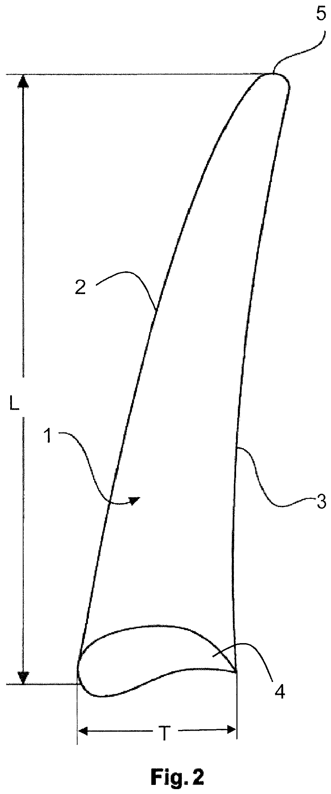

Fig. 2 zeigt eine schematische Ansicht eines Rotorblattes 1 mit einer Rotorblattvorderkante 2 sowie einer Rotorblatthinterkante 3. Das Rotorblatt 1 erstreckt sich von einer Rotorblattwurzel 4 zu einer Rotorblattspitze 5. Die Länge zwischen der Rotorblattspitze 5 und der Rotorblattwurzel 4 wird als Rotorblattlänge L bezeichnet. Der Abstand zwischen Rotorblattvorderkante 2 und Rotorblatthinterkante 3 wird als Profiltiefe T bezeichnet. Die Rotorblattlänge L und die Profiltiefe T bestimmen maßgeblich die Windangriffsfläche des Rotorblattes 1.

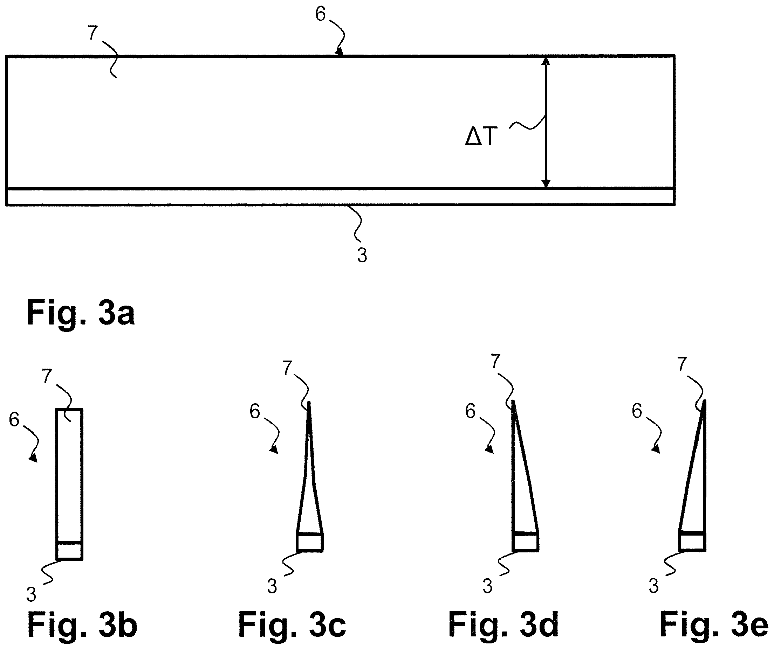

Fig. 3a zeigt eine schematische Darstellung eines Teilabschnitts einer Rotorblatthinterkante 3 mit zumindest einem daran angeordneten Profilelement 6. Das Profilelement 6 weist einen plattenförmigen Profilabschnitt 7 auf. Der Profilabschnitt 7 weist in Verlängerung der Rotorblatthinterkante 3 einen sich verjüngenden Querschnittsverlauf auf, wie er beispielsweise in den Fig. 3c bis 3e gezeigt ist. Fig. 3c zeigt einen sich gleichmäßig von der Druckseite und der Saugseite verjüngenden Querschnittsverlauf, wohingegen Fig. 3d und 3e Querschnittsverläufe zeigen, die eine Verjüngung nur von einer der Seiten des Profilelementes 6 aus, d.h. von der druckseitigen oder der saugseitigen Fläche aus, zeigen. Der Profilabschnitt 7 kann alternativ oder abschnittsweise auch zusätzlich in Verlängerung der Rotorblatthinterkante 3 einen konstanten Querschnittsverlauf aufweisen. Hierzu kann der Profilabschnitt 7 einen im Wesentlichen quaderförmigen Querschnitt aufweisen, wie in Fig. 3b schematisch gezeigt ist. Auch andere Querschnittsverläufe, beispielsweise konkave, konvexe und ähnliche, sowie Kombinationen zwischen den gezeigten Verläufen sind vorstellbar.

Das Profilelement 6 ist an den Verlauf der Rotorblatthinterkante 3 in Längsrichtung des Rotorblatts 1 angepasst, so dass es einem gekrümmten wie auch in sich gewundenen Verlauf der Rotorblatthinterkante 3 folgt. Das Profilelement 6 bildet eine abschnittsweise Verlängerung der Rotorblatthinterkante 3.

Mit $\Delta T$ ist eine Erstreckung des Profilabschnitts 7 über die Rotorblatthinterkante 3 hinaus bezeichnet, welche zu einer Zunahme der Profiltiefe T bei der nachträglichen Anordnung des Profilelements 6 an der Rotorblatthinterkante 3 führt. Dabei kann sich die Erstreckung $\Delta T$ des zumindest abschnittsweise über die Rotorblattlänge L erstreckenden Profilabschnitts 6 beispielsweise in Abhängigkeit von der Profiltiefe T des Rotorblatts 1 ändern. Das Profilelement 6 ist in der dargestellten Ausführungsform einteilig ausgeführt und erstreckt sich zumindest abschnittsweise über die Rotorblattlänge L. Denkbar ist auch eine segmentierte Anordnung von mehreren Profilelementen 6. Hierzu sind mehrere Profilelemente 6 nebeneinander an der Rotorblatthinterkante 3 angeordnet. Vorzugsweise sind in diesem Fall die Übergänge zwischen den mehreren Profilelementen 6 geschäftet ausgeführt, wobei auch andere Ausgestaltungen der Übergänge möglich sind.

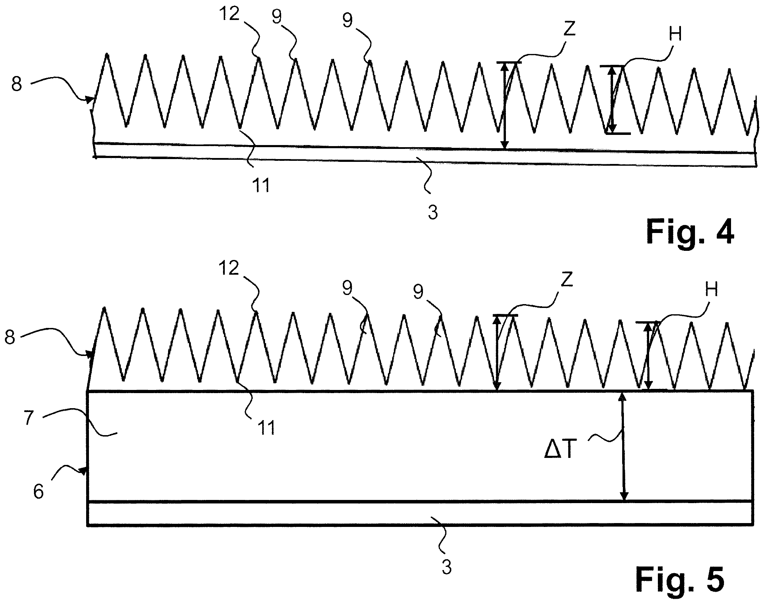

In Fig. 4 ist eine schematische Darstellung eines Teilabschnitts einer Rotorblatthinterkante 3 mit einem daran angeordneten, einen gezackten Verlauf aufweisenden Abschnitt 8 vor der Veränderung der Profiltiefe T des Rotorblatts 1 gezeigt. Der Abschnitt 8 ist normal zur Rotorblatthinterkante 3 angeordnet, d.h. er bildet im Wesentlichen eine Fortführung der Profilsehne des Rotorblatts 1. Der mit Zacken 9 versehene Abschnitt 8 dient zur Verbesserung des Strömungsverhaltens an der Rotorblatthinterkante 3. Der Abstand zwischen einer Zackenspitze 12 als äußerstem Punkt der Zacken 9 und dem Beginn der Rotorblatthinterkante 3 ist mit dem Bezugszeichen Z versehen. Ein jeweils zwischen zwei benachbarten Zacken 9 liegender tiefster Punkt ist als Zackengrund 11 bezeichnet. Der Abstand Z umfasst den Bereich zwischen der der Rotorblatthinterkante 3 zugewandten Seite des Abschnitts 8, das heißt dem Beginn des Abschnitts 8, und dem Zackengrund 11, sowie dem Abstand zwischen dem Zackengrund 11 und der Zackenspitze 12. Der jeweilige Abstand zwischen dem Zackengrund 11 und der Zackenspitze 12 einer Zacke 9 wird als Zackenhöhe H bezeichnet. Die Zackenhöhe H und/oder ein Abstand zwischen zwei Zacken 9 und/oder eine Form der Zacken 9 selbst kann entlang des Verlaufs der Rotorblatthinterkante 3 variieren. In diesem Beispiel ist der Abschnitt 8 mit einem V-förmig verlaufenden, gezackten Verlauf gezeigt. Alternativ oder zusätzlich zu der illustrierten V-förmig verlaufenden Form sind auch vollständig oder teilweise abgerundete Verläufe bis hin zu sinusförmigen Verläufen vorstellbar.

In Fig. 5 ist eine schematische Darstellung des Teilabschnitts der Rotorblatthinterkante 3 gemäß Fig. 4 mit einem daran angeordneten Profilelement 6 gezeigt, an das sich der gezackte Abschnitt 8 anschließt. Das Profilelement 6 ist zwischen der Rotorblatthinterkante 3 und dem gezackten Abschnitt 8 angeordnet. Die Erstreckung ΔT bzw. Breite des Profilabschnitts 7 bestimmt die Veränderung der Profiltiefe T des Rotorblatts 1. Der sich an den Profilabschnitt 7 anschließende gezackte Abschnitt 8 kann ebenfalls nachträglich an dem Profilelement 6 angeordnet werden. Bevorzugt ist eine Ausgestaltung, bei welcher der Abschnitt 8 Bestandteil des Profilelementes 6 ist.

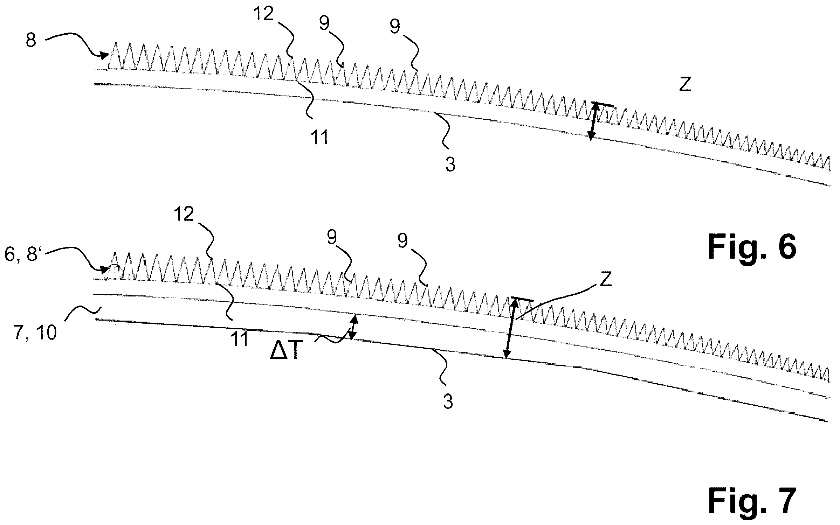

In Fig. 6 ist eine schematische Darstellung eines Teilabschnitts einer Rotorblatthinterkante 3 mit als Profilelement ausgeführten, einen gezackten Verlauf aufweisenden Abschnitt 8 vor der Veränderung der Profiltiefe T des Rotorblatts 1 gezeigt.

In Fig. 7 ist eine schematische Darstellung des Teilabschnitts der Rotorblatthinterkante 3 gemäß Fig. 6 gezeigt. Bei dieser Ausführungsform bildet ein in seinen geometrischen Abmessungen veränderter, einen gezackten Verlauf aufweisender Abschnitt 8' selbst das Profilelement 6. Zur Veränderung der Profiltiefe T des Rotorblatts 1 ist vorgesehen, den Abstand Z um eine Erstreckung ΔT zu vergrößern. Hierzu ist in dem Bereich zwischen dem Beginn des Abschnitts 8' und dem Zackengrund 11 eine zusätzliche, als Profilabschnitt 7 fungierende, Beabstandung 10 vorgesehen. Eine Alternative hierzu sieht vor, die Zackenhöhe H und/oder Breite zu vergrößern, während der Abstand zwischen dem Zackengrund 11 und dem Beginn des Abschnitts 8' gleich bleibt. Zur Veränderung der Profiltiefe T wird der an der Rotorblatthinterkante 3 angeordnete Abschnitt 8 durch einen Abschnitt 8' ersetzt.

Die Auslegung der Windenergieanlage 100 beziehungsweise die Dimensionierung und Ausgestaltung der Rotorblätter 1 orientiert sich an einem normierten Standort beziehungsweise einer normierten Last. Diese berücksichtigt auftretende Lastspitzen, um die Betriebssicherheit der Windenergieanlage zu gewährleisten. Hierdurch sind die Rotorblätter 1 in ihrer späteren geometrischen Ausgestaltung festgelegt. Daher weisen die Rotorblätter 1 eine fixe Geometrie auf, welche einer späteren Anpassung hinsichtlich ihrer Verwindung oder Profiltiefe T im Herstellprozess nicht mehr zugänglich ist.

Für die Auslegung der Rotorblätter fließen Normparameter in die von einer normierten Last abhängigen, jedoch nicht standortspezifischen, Dimensionierung der Windenergieanlage ein. Bei den Normparametern handelt es sich unter anderem um Scherung, das Auftreten von Turbulenzen, klimatische Bedingungen, Luftdichte, Referenzgeschwindigkeiten für Windklassen und Windzonen. Auf Basis dieser Informationen werden die Rotorblätter 1 dimensioniert, um für ein angemessenes Schutzniveau gegen Schäden aus Risiken während der geplanten Lebensdauer der Windenergieanlage zu sorgen. Die tatsächlich auftretenden Betriebsbedingungen weichen oftmals von diesen der Auslegung zugrunde gelegten Normparameter ab. Es können sich somit Lastreserven ergeben, beispielsweise aufgrund einer geringeren Winddichte als bei der Auslegung der Rotorblätter 1 zugrunde gelegt wurde. Diese Lastreserve, die aus einer Überdimensionierung resultiert, wird als Parameter für die Bestimmung der die für diesen Standort spezifischen zulässigen Profiltiefe T der Rotorblätter 1 verwendet. Wurde die für den Standort spezifische zulässige Profiltiefe T anhand der tatsächlich auftretenden Last bestimmt, lässt sich hieraus die mögliche zusätzliche Erstreckung ΔT des Profilelements 6 bestimmen. Somit wird die Windangriffsfläche, die sich aus der Rotorblattlänge sowie der Profiltiefe des Rotorblatts 1 und der Erstreckung ΔT des Profilelementes ergibt, standortspezifisch anpassen, um die Jahresenergieerzeugung der Windkraftanlage zu optimieren.

Es sollte beachtet werden, dass das Profilelement 6 natürlich auch weitere, vorteilhafte Anwendungen haben kann und somit nicht auf die Lastoptimierung beschränkt ist. Beispielsweise kann die Ausgestaltung mittels eines oder mehrerer Profilelemente 6 zur Optimierung der Induktionsfaktorverteilung Anwendung finden. Hierzu wird, vergleiche beispielsweise die Schrift "Strömungsbeeinflussung bei Rotorblättern von Windenergieanlagen mit Schwerpunkt auf Grenzschichtabsaugung", B. Souza Heinzelmann, http://dx.doi.org/10.14279/depositonce-2975, häufig ein axialer Induktionsfaktor a und ein radialer Induktionsfaktor a' betrachtet, welche durch die axiale bzw. radiale Verzögerung der Luftströmung in der Rotorebene den Wirkungsgrad des Rotors ausdrücken. Mit der Windgeschwindigkeit $u_1$ weit vor der Rotorebene und der Windgeschwindigkeit $u_2$ in der Rotorebene wird der axiale Induktionsfaktor a, wie folgt definiert:

$$a = 1 - \frac{u_2}{u_1}$$

Der optimale Betriebspunkt wird durch einen Wert von 1/3 für a im idealen Fall charakterisiert. Wird die lokale Schnelllaufzahl $\lambda_{lokal}$ an einer lokalen Radiusposition eingeführt, kann der tangentiale Induktionsfaktor a' wie folgt definiert werden:

$$a' = \frac{a \cdot (1 - a)}{\lambda_{lokal}^2}$$

**Patentansprüche**

1. Rotorblatt (1) eines Rotors einer Windenergieanlage, mit einer sich zwischen Rotorblattwurzel (4) und Rotorblattspitze (5) über eine Rotorblattlänge (L) erstreckenden Rotorblatthinterkante (3) sowie einer sich zwischen Rotorblattvorderkante (2) und Rotorblatthinterkante (3) einstellenden Profiltiefe (T), **dadurch gekennzeichnet, dass** das Rotorblatt (1) zumindest ein einen durchgängigen Profilabschnitt (7) aufweisendes Profilelement (6) aufweist, das an oder im Bereich der Rotorblatthinterkante (3) zur Veränderung der Profiltiefe (T) des Rotorblatts (1) anbringbar ist, dessen Erstreckung (ΔT) über die Rotorblatthinterkante (3) hinaus auf Grundlage des Vorliegens einer Differenz zwischen der normierten Last, die der Dimensionierung der Profiltiefe (T) des Rotorblattes (1) bei dessen Fertigung zu Grunde lag, und einem sich an einem Aufstellungsort der Windenergieanlage einstellenden standortspezifischen Lastniveau bestimmt, **dadurch gekennzeichnet, dass** sich die Erstreckung (ΔT) des zumindest abschnittsweise über die Rotorblattlänge (L) erstreckenden Profilelements (6) in Abhängigkeit von der Profiltiefe (T) des Rotorblatts (1) ändert.

2. Rotorblatt (1) nach Anspruch 1, **dadurch gekennzeichnet, dass** sich das zumindest eine Profilelement (6) zumindest abschnittsweise über die Rotorblattlänge (L) erstreckt.

3. Rotorblatt (1) nach einem der Ansprüche 1 oder 2, **dadurch gekennzeichnet, dass** das zumindest eine Profilelement (6) in Verlängerung der Rotorblatthinterkante (3) einen sich verjüngenden Verlauf aufweist.

4. Rotorblatt (1) nach einem der Ansprüche 1 oder 2, **dadurch gekennzeichnet, dass** das zumindest eine Profilelement (6) in Verlängerung der Rotorblatthinterkante (3) einen konstanten Verlauf aufweist.

5. Rotorblatt (1) nach einem der vorangehenden Ansprüche, **dadurch gekennzeichnet, dass** das sich zumindest abschnittsweise über die Rotorblattlänge (L) erstreckende Profilelement (6) einen zur Längsachse des Rotorblattes (1) abschnittsweise gewundenen Verlauf aufweist.

6. Rotorblatt (1) nach einem der vorangehenden Ansprüche, **dadurch gekennzeichnet, dass** das Profilelement (6) mehrteilig ausgebildet ist und einen sich in Verlängerung der Rotorblatthinterkante (3) an den Profilabschnitt (7) anschließenden Abschnitt (8) mit einem unterbrochenen Verlauf aufweist.

7. Rotorblatt (1) nach Anspruch 6, **dadurch gekennzeichnet, dass** der Abschnitt (8) einen gezackten Verlauf aufweist.

8. Rotorblatt (1) nach einem der vorangehenden Ansprüche, **dadurch gekennzeichnet, dass** das Profilelement (6) einteilig ausgebildet ist und einen gezackten Verlauf aufweist.

9. Windenergieanlage (100) mit wenigstens einem Rotorblatt (1) nach einem der Ansprüche 1 bis 8, vorzugsweise mit drei Rotorblättern (1) nach einem der Ansprüche 1 bis 8.

10. Verfahren zur Verbesserung des Wirkungsgrades eines Rotors einer Windenergieanlage, mit wenigstens einem Rotorblatt (1), einer sich zwischen Rotorblattwurzel (4) und Rotorblattspitze (5) über eine Rotortblattlänge (L) erstreckenden Rotorblatthinterkante (3) sowie einer sich zwischen Rotorblattvorderkante (2) und Rotorblatthinterkante (3) einstellenden Profiltiefe (T), **dadurch gekennzeichnet, dass** an oder im Bereich der Rotorblatthinterkante (3) zur Veränderung der Profiltiefe (T) des Rotorblatts (1) zumindest ein einen durchgängigen Profilabschnitt (7) aufweisendes Profilelement (6) angebracht wird, dessen Erstreckung (ΔT) über die Rotorblatthinterkante (3) hinaus auf Grundlage des Vorliegens einer Differenz zwischen einer normierten Last, die der Dimensionierung der Profiltiefe (T) des Rotorblattes (1) bei dessen Fertigung zu Grunde lag, und einem sich an einem Aufstellungsort der Windenergieanlage einstellenden standortspezifischen Lastniveau bestimmt wird, **dadurch gekennzeichnet, dass** sich die Erstreckung (ΔT) des zumindest abschnittsweise über die Rotorblattlänge (L) erstreckenden Profilelements (6) in Abhängigkeit von der Profiltiefe (T) des Rotorblatts (1) ändert.

11. Verfahren nach Anspruch 10, **dadurch gekennzeichnet, dass** das mit zunehmender Unterschreitung der lastabhängigen Dimensionierung durch das sich einstellende Lastniveau eine größere Erstreckung (ΔT) des zumindest einen Profilelements (6) gewählt wird.

12. Verfahren nach einem der Ansprüche 10 oder 11, **dadurch gekennzeichnet, dass** das zumindest eine Profilelement (6) nachgerüstet wird.

## Claims

1. A rotor blade (1) of a rotor of a wind turbine, having a rotor blade trailing edge (3) which extends between a rotor blade root (4) and a rotor blade tip (5) over a rotor blade length (L), and having a profile depth (T) which is established between a rotor blade leading edge (2) and the rotor blade trailing edge (3), **characterized in that** the rotor blade (1) has at least one profile element (6) which has a continuous profile section (7) and which, for the purpose of changing the profile depth (T) of the rotor blade (1), is able to be attached at or in the region of the rotor blade trailing edge (3) and whose extent (ΔT) beyond the rotor blade trailing edge (3) is determined based on the presence of a difference between a standardized load, on which a dimensioning of the profile depth (T) of the rotor blade (1) was based at its construction, and a site-specific load level which is established at an erection location of the wind turbine, **characterized in that** the the extent ($\Delta$T) of the profile element (6) extending at least sectionally over the rotor blade length (L) varies in a manner dependent on the profile depth (T) of the rotor blade (1).

2. The rotor blade (1) as claimed in claim 1, **characterized in that** the at least one profile element (6) extends at least sectionally over the rotor blade length (L).

3. The rotor blade (1) as claimed in either of claims 1 and 2, **characterized in that** the at least one profile element (6), in the extension of the rotor blade trailing edge (3), has a narrowing contour.

4. The rotor blade (1) as claimed in either of claims 1 and 2, **characterized in that** the at least one profile element (6), in the extension of the rotor blade trailing edge (3), has a constant contour.

5. The rotor blade (1) as claimed in one of the preceding claims, **characterized in that** the profile element (6) extending at least sectionally over the rotor blade length (L) has a contour which is sectionally twisted with respect to the longitudinal axis of the rotor blade (1).

6. The rotor blade (1) as claimed in one of the preceding claims, **characterized in that** the profile element (6) is of multi-part form and has a section (8) which, in the extension of the rotor blade trailing edge (3), adjoins the profile section (7) and which has an interrupted contour.

7. The rotor blade (1) as claimed in claim 6, **characterized in that** the section (8) has a serrated contour.

8. The rotor blade (1) as claimed in one of the preceding claims, **characterized in that** the profile element (6) is of single-part form and has a serrated contour.

9. A wind turbine (100) having at least one rotor blade (1) as claimed in one of claims 1 to 8, preferably having three rotor blades (1) as claimed in one of claims 1 to 8.

10. A method for improving the efficiency of a rotor of a wind turbine, having at least one rotor blade (1), having a rotor blade trailing edge (3) which extends between a rotor blade root (4) and a rotor blade tip (5) over a rotor blade length (L), and having a profile depth (T) which is established between a rotor blade leading edge (2) and the rotor blade trailing edge (3), **characterized in that**, for the purpose of changing the profile depth (T) of the rotor blade (1), at least one profile element (6) having a continuous profile section (7) is attached at or in the region of the rotor blade trailing edge (3), the extent ($\Delta$T) of which profile element beyond the rotor blade trailing edge (3) is determined based on the presence of a difference between a standardized load, on which a dimensioning of the profile depth (T) of the rotor blade (1) was based at its construction, and a site-specific load level which is established at an erection location of the wind turbine **characterized in that** the the extent ($\Delta$T) of the profile element (6) extending at least sectionally over the rotor blade length (L) varies in a manner dependent on the profile depth (T) of the rotor blade (1).

11. The method as claimed in claim 10, **characterized in that** the, with an increasing fall below the load-dependent dimensioning due to the load level established, a greater extent ($\Delta$T) of the at least one profile element (6) is selected.

12. The method as claimed in either of claims 10 and 11, **characterized in that** the at least one profile element (6) is retrofitted.

## Revendications

1. Pale de rotor (1) d'un rotor d'une éolienne, avec un bord de fuite de pale de rotor (3) s'étendant entre un pied de pale de rotor (4) et un bout de pale de rotor (5) sur une longueur de pale de rotor (L) ainsi qu'une profondeur de profil (T) se réglant entre le bord d'attaque de pale de rotor (2) et le bord de fuite de pale de rotor (3), **caractérisée en ce que** la pale de rotor (1) présente au moins un élément de profil (6), présentant une partie de profil (7) continue, qui peut être monté sur ou dans la zone du bord de fuite de pale de rotor (3) pour modifier la profondeur de profil (T) de la pale de rotor (1), dont l'étendue ($\Delta$T) au-delà du bord de fuite de pale de rotor (3) déterminée sur la base de la présence d'une différence entre la charge normalisée, qui servait de base au dimensionnement de la profondeur de profil (T) de la pale de rotor (1) lors de la fabrication de celle-ci, et un niveau de charge spécifique à l'emplacement se réglant en un lieu d'installation de l'éolienne, **caractérisée en ce que** l'étendue ($\Delta$T) de l'élément de profil (6) s'étendant au moins sur certaines parties sur la longueur de pale de rotor (L) change en fonction de la profondeur de profil (T) de la pale de rotor (1).

2. Pale de rotor (1) selon la revendication 1, **caractérisée en ce que** le au moins un élément de profil (6) s'étend au moins sur certaines parties sur la longueur de pale de rotor (L).

3. Pale de rotor (1) selon l'une quelconque des revendications 1 ou 2, **caractérisée en ce que** le au moins un élément de profil (6) présente dans le prolongement du bord de fuite de pale de rotor (3) un tracé s'amincissant.

4. Pale de rotor (1) selon l'une quelconque des revendications 1 ou 2, **caractérisée en ce que** le au moins un élément de profil (6) présente dans le prolongement du bord de fuite de pale de rotor (3) un tracé constant.

5. Pale de rotor (1) selon l'une quelconque des revendications précédentes, **caractérisée en ce que** l'élément de profil (6) s'étendant au moins sur certaines parties sur la longueur de pale de rotor (L) présente un tracé sinueux sur certaines parties par rapport à l'axe longitudinal de la pale de rotor (1).

6. Pale de rotor (1) selon l'une quelconque des revendications précédentes, **caractérisée en ce que** l'élément de profil (6) est réalisé en plusieurs parties et présente une partie (8) avec un tracé interrompu raccordée à la partie de profil (7) dans le prolongement du bord de fuite de pale de rotor (3).

7. Pale de rotor (1) selon la revendication 6, **caractérisée en ce que** la partie (8) présente un tracé en dents de scie.

8. Pale de rotor (1) selon l'une quelconque des revendications précédentes, **caractérisée en ce que** l'élément de profil (6) est réalisé en une partie et présente un tracé en dents de scie.

9. Eolienne (100) avec au moins une pale de rotor (1) selon l'une quelconque des revendications 1 à 8, de préférence avec trois pales de rotor (1) selon l'une quelconque des revendications 1 à 8.

10. Procédé pour améliorer le rendement d'un rotor d'une éolienne, avec au moins une pale de rotor (1), un bord de fuite de pale de rotor (3) s'étendant entre un pied de pale de rotor (4) et un bout de pale de rotor (5) sur une longueur de pale de rotor (L) ainsi qu'une profondeur de profil (T) se réglant entre le bord d'attaque de pale de rotor (2) et le bord de fuite de pale de rotor (3), **caractérisé en ce qu'**au moins un élément de profil (6) présentant une partie de profil (7) continue est monté sur ou dans la zone du bord de fuite de pale de rotor (3) pour modifier la profondeur de profil (T) de la pale de rotor (1), dont l'étendue (ΔT) au-delà du bord de fuite de pale de rotor (3) est déterminée sur la base de la présence d'une différence entre une charge normalisée, qui servait de base au dimensionnement de la profondeur de profil (T) de la pale de rotor (1) lors de la fabrication de celle-ci, et un niveau de charge spécifique à l'emplacement se réglant en un lieu d'installation de l'éolienne, **caractérisé en ce que** l'étendue (ΔT) de l'élément de profil (6) s'étendant au moins sur certaines parties sur la longueur de pale de rotor (L) change en fonction de la profondeur de profil (T) de la pale de rotor (1).

11. Procédé selon la revendication 10, **caractérisé en ce que**, avec la non-atteinte croissante du dimensionnement dépendant de la charge par le niveau de charge se réglant, une étendue (ΔT) plus importante du au moins un élément de profil (6) est sélectionnée.

12. Procédé selon l'une quelconque des revendications 10 ou 11, **caractérisé en ce que** le au moins un élément de profil (6) est utilisé en rééquipement.

**Fig. 1**

**Fig. 2**

**Fig. 3a**

**Fig. 3b**          **Fig. 3c**          **Fig. 3d**          **Fig. 3e**

EP 3 665 384 B1

Fig. 4

Fig. 5

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170204832 A1
- EP 3176425 A1
- DE 102013204637 A1
- US 20120141269 A1